# EUROPÄISCHE PATENTSCHRIFT

(11) **EP 1 806 564 B1**
(45) Veröffentlichungstag und Bekanntmachung des Hinweises auf die Patenterteilung: **10.09.2014**
(21) Anmeldenummer: 06026469.4
(22) Anmeldetag: 20.12.2006
(51) Int. Cl.: G01D 11/24, G01D 11/26

(54) **Gehäuseabschluss für Elektronikgehäuse und Verfahren zu dessen Herstellung**
Case closure for electronics enclosure and method for its manufacture
Finition de boîtier pour boîtier électronique et procédé pour sa fabrication

(30) Priorität: 10.01.2006 DE 102006001290
(43) Veröffentlichungstag der Anmeldung: 11.07.2007
(73) Patentinhaber: Pepperl + Fuchs GmbH, 68307 Mannheim (DE)
(72) Erfinder: Muschketat, Klaus, 68529 Ladenburg (DE)
(74) Vertreter: Schiffer, Axel Martin

(56) Entgegenhaltungen:
- DE-A1- 4 225 267
- DE-A1- 19 529 181
- US-A- 5 470 252
- US-A1- 2003 054 698
- US-B1- 6 617 845

## Beschreibung

Die Erfindung betrifft einen Gehäuseabschluss für Elektronikgehäuse, insbesondere Sensorgehäuse, nach dem Oberbegriff des Anspruchs 1. Weiterhin bezieht sich die Erfindung in Anspruch 15 auf ein Verfahren zur Herstellung eines Gehäuseabschlusses für Elektronikgehäuse.

Ein gattungsgemäßer Gehäuseabschluss weist mehrere Kontaktelemente, insbesondere Kontaktstifte, zum Kontaktieren einer in dem Elektronikgehäuse aufgenommenen Schaltung auf. Die Kontaktelemente sind dabei jeweils mit Adern eines Anschlusskabels verbunden. Zum Bereitstellen einer optischen Anzeige für einen Benutzer ist außerdem ein Leuchtelement, insbesondere eine Leuchtdiode, vorgesehen.

Solche Gehäuseabschlüsse werden für Elektronikgehäuse allgemein und insbesondere für zylindrische, hülsenartige Gehäuse eingesetzt. Derartige Gehäuseformen werden beispielsweise für Sensoren, insbesondere für Näherungsschalter verwendet.

In DE 101 08 350 C1 ist ein gattungsgemäßer Gehäuseabschluss beschrieben, der aus einer Vielzahl von Teilen aufgebaut ist. Um eine besonders hohe Dichtigkeit und Festigkeit zu erzielen, wird dort eine Konstruktion gewählt, bei der über ein Isolationsteil und ein Verbindungsteil eine Kappe aufgepresst wird.

Insgesamt ist der dort beschriebene mehrteilige Aufbau in der Herstellung aufwändig und teuer.

DE 198 22 354 beschreibt einen Steckereinsatz mit einem hülsenförmigen Aufnahmeteil, in welches abdichtend ein zylindrischer Stecker mit leitenden Stiften oder Buchsen eingesetzt ist.

US 5 244 409 offenbart ein Stecker-Bauteil mit mindestens einer Lichtquelle zum Anzeigen eines Betriebszustandes des Stekkers.

**Aufgabe** der Erfindung ist es, einen Gehäuseabschluss für Elektronikgehäuse zu schaffen, der möglichst kompakt aufgebaut und einfach herzustellen ist, der hohe Kabelabzugskräfte aufweist und eine Schaltzustandsanzeige besitzt, die sowohl von der Seite als auch in Kabelaustrittsrichtung sichtbar ist. Die Montage eines Endgeräts, insbesondere eines Sensors, soll mit dem erfindungsgemäßen Gehäuseabschluss besonders einfach und zuverlässig möglich sein. Außerdem soll ein Verfahren zur Herstellung eines Gehäuseabschlusses angegeben werden.

Diese Aufgabe wird erfindungsgemäß in einem ersten Aspekt durch den Gehäuseabschluss mit den Merkmalen des Anspruchs 1 gelöst. In einem weiteren Aspekt wird die Aufgabe durch das Verfahren mit den Merkmalen des Anspruchs 15 gelöst.

Bevorzugte Ausgestaltungen des erfindungsgemäßen Gehäuseabschlusses und vorteilhafte Weiterbildungen des erfindungsgemäßen Verfahrens sind Gegenstand der Unteransprüche. Diese beziehen sich insbesondere auf eine Sensorbaueinheit und einen Sensor, in welchen der erfindungsgemäße Gehäuseabschluss eingesetzt wird.

Der Gehäuseabschluss der oben angegebenen Art ist erfindungsgemäß dadurch weitergebildet, dass die Kontaktelemente und das Leuchtelement in einem wenigstens teilweise transparenten Kontakt-Anzeige-Modul untergebracht sind und dass das Kontakt-Anzeige-Modul zusammen mit einem Endbereich des Anschlusskabels zur mechanischen Stabilisierung und elektrischen Isolierung von einer wenigstens teilweise transparenten, einstückig gefertigten Ummantelung umgeben ist, so dass das Anschlusskabel mit dem Kontakt-Anzeige-Modul zugfest verbunden ist.

Als erster Kerngedanke der Erfindung kann angesehen werden, zur Bereitstellung einer Kontaktier- und einer Anzeigefunktion zunächst ein im Wesentlichen einstückiges und wenigstens teilweises transparentes Kontakt-Anzeige-Modul vorzusehen. Im Vergleich zu den vielteiligen Aufbauten im Stand der Technik werden bereits hierdurch eine erhebliche Vereinfachung und damit bedeutende Kostenvorteile bei der Herstellung erzielt.

Ein weiterer Kerngedanke der Erfindung ist darin zu sehen, dass das Kontakt-Anzeige-Modul zusammen mit einem Endbereich des Anschlusskabels mit einer ebenfalls einstückigen und wenigstens teilweise transparenten Ummantelung versehen ist, durch welche eine elektrische Isolierung und mechanische Stabilisierung des Aufbaus bereitgestellt wird.

Der erfindungsgemäße Gehäuseabschluss ist also insgesamt mit sehr wenigen Komponenten aufgebaut, so dass die Herstellung entsprechend vereinfacht wird.

Ein wesentlicher Vorteil in mechanischer Hinsicht ist darin zu sehen, dass in einfacher Weise eine zugfeste Verbindung zwischen Kontakt-Anzeige-Modul und Anschlusskabel, dementsprechend also hohe Kabelabzugskräfte, erzielt werden.

Bei dem erfindungsgemäßen Verfahren werden die Adern eines Anschlusskabels mit Kontaktelementen, insbesondere Kontaktstiften, verbunden, die in einem wenigstens teilweise transparenten Kontakt-Anzeige-Modul aufgenommen sind. In das Kontakt-Anzeige-Modul wird in eine dort vorgesehene Aufnahme erfindungsgemäß ein Leuchtelement, insbesondere eine Leuchtdiode, eingesetzt. Zur elektrischen Isolierung und mechanischen Stabilisierung wird erfindungsgemäß schließlich um das Kontakt-Anzeige-Modul und einen Endbereich des Anschlusskabels eine wenigstens teilweise transparente, einstückige Ummantelung angebracht.

Bei einer besonders vorteilhaften Ausgestaltung des erfindungsgemäßen Gehäuseabschlusses weist die Ummantelung einen durchmessergrößeren gehäusenahen Anschlussbereich und einen durchmesserkleineren gehäusefernen Kabelansatz auf, wobei ein Übergang zwischen Anschlussbereich und Kabelansatz für einen zugfesten hintergreifenden Eingriff mit einer Gehäusehülse ausgebildet ist. Dies lässt sich einerseits herstellungstechnisch einfach bewerkstelligen und gestattet außerdem den Zusammenbau eines Endgeräts, beispielsweise eines Sensors in einem einzügigen Verfahren. Hierunter wird ein Verfahren verstanden, bei dem beispielsweise eine Sensor-Baueinheit mit einem erfindungsgemäßen Gehäuseabschluss in eine Gehäusehülse eingeschoben wird. Da die Gehäusehülse an einer dem Gehäuseabschluss gegenüberliegenden Seite mit einer Frontkappe, die auch als Becher bezeichnet werden kann, abgeschlossen sein kann, ist zum Zusammenbau im Wesentlichen nur ein Verfahrensschritt notwendig.

Gegenstand der Erfindung ist demgemäß auch eine Sensor-Baueinheit mit einem erfindungsgemäßen Gehäuseabschluss, mit einer auf einer Leiterplatte angeordneten elektrischen Schaltung, wobei die Kontaktstifte und die Anschlüsse des Leuchtelements, insbesondere der Leuchtdiode, des Gehäuseabschlusses mit der Leiterplatte verbunden, insbesondere verlötet, sind, und mit einem an der Leiterplatte dem Gehäuseabschluss gegenüberliegend angeordneten Sensorelement. Bei dem Sensorelement kann es sich grundsätzlich um einen beliebigen Sensor, beispielsweise einen Ultraschall-, Temperatur-, Hall- und/oder Drucksensor handeln. Besonders vorteilhaft kann die hier beschriebene Technologie bei Näherungsschaltern eingesetzt werden, das heißt, dass als Sensorelement eine Spule mit einem Ferritelement verwendet wird.

Bei einer besonders einfachen, gleichwohl aber effektiven Herstellungsvariante eines Sensors kann dann die Gehäusehülse mit dem Gehäuseabschluss durch einen umbördelten Rand der Gehäusehülse zugfest verbunden werden.

Besonders bevorzugt ist außerdem eine Variante, bei der die Ummantelung durch Umspritzen des Kontakt-Anzeige-Moduls und des Endbereichs des Anschlusskabels angebracht wird. Hierdurch lässt sich die gewünschte elektrische und mechanische Funktionalität der Ummantelung besonders zuverlässig und einfach erreichen.

Zweckmäßig umgibt die Ummantelung den Endbereich des Anschlusskabels und das Kontakt-Anzeige-Modul in Umfangsrichtung vollständig. Vorteilhaft ist in diesem Zusammenhang außerdem, wenn ein, beispielsweise im Wesentlichen zylinderförmiger, Bereich des Kontakt-Anzeige-Moduls, aus welchem in Axialrichtung Kontaktstifte und Anschlüsse einer Leuchtdiode herausragen, nicht von der Ummantelung umgeben ist. Um diesen zylinderförmigen Bereich kann dann ein Dichtelement angeordnet werden, welches im zusammengebauten Zustand des Elektronikgehäuses dessen Dichtigkeit verbessert.

Prinzipiell sind zwar auch andere Herstellungsvarianten für die Ummantelung denkbar. Beispielsweise könnte die Ummantelung aus zwei Hälften zu einer einstückigen Ummantelung verschweißt oder verklebt werden. Diese Varianten haben aber bis jetzt noch nicht zu zufriedenstellenden Resultaten geführt. Insbesondere ließen hierbei die Dichtigkeit und die Zugfestigkeit zu wünschen übrig. Weiterhin gestalten sich diese Herstellungsvarianten vergleichsweise aufwändig.

Bei bevorzugten Ausgestaltungen werden sowohl die Ummantelung als auch das Kontakt-Anzeige-Modul aus transparenten Kunststoffen gefertigt. Im Hinblick auf die Funktionalität der Ummantelung als Kabeldurchführung wird für die Ummantelung bevorzugt ein weicheres Material gewählt als für das Kontakt-Anzeige-Modul.

Um einen möglichst guten mechanischen Zusammenhalt und insbesondere hohe Kabelabzugskräfte zu erreichen, weist das Kontakt-Anzeige-Modul bevorzugt wenigstens eine, insbesondere umlaufende, Profilierung auf. An dieser Profilierung kann sich die, beispielsweise umspritzte, Ummantelung gegenüber Zugkräften abstützen.

Zur elektrischen Isolierung und zur mechanischen Stabilisierung werden innere Hohlräume von elektronischen Geräten bevorzugt mit einem aushärtenden, isolierenden Material ausgeschäumt oder vergossen. Damit hierbei die im Gehäuseinneren vorhandene Luft bei der Montage entweichen kann, ist bei dem erfindungsgemäßen Gehäuseabschluss in dem Kontakt-Anzeige-Modul und/oder in der Ummantelung zweckmäßig ein Entlüftungskanal gebildet.

Eine Reinigung eines fertiggestellten Endgeräts von überschüssigem, eventuell nach außen ausgetretenen Verguss- oder Ausschäummaterial kann entfallen, wenn in dem Entlüftungskanal ein halbdurchlässiges Element angeordnet ist, welches für Luft durchlässig und für ein einzusetzendes Ausschäum- oder Vergussmaterial undurchlässig ist. Bevorzugt wird als solches halb durchlässiges Element ein kleines Filzstückchen in den Entlüftungskanal eingesetzt. Grundsätzlich kann aber auch ein beliebiges anderes Gewebe- oder Faser-Material, beispielsweise auch Wolle, zum Verhindern eines Austritts des Verguss- oder Ausschäummaterials verwendet werden.

Ein Entlüftungskanal kann zum Beispiel bereits durch eine sich bis zum Gehäuseinneren erstreckende Nut auf der Außenseite der Ummantelung gebildet sein. Diese Nut kann bei Fertigstellung des Geräts beispielsweise durch einen umbördelten Rand der Gehäusehülse verschlossen werden.

Eine bessere Dichtigkeit des Gehäuses wird bei einer Variante erreicht, bei der das Kontakt-Anzeige-Modul als Teil des Entlüftungskanals eine sich in Achsrichtung erstreckende Sackbohrung mit einer quer zur Achsrichtung verlaufenden seitlichen Öffnung aufweist. Zweckmäßig weist dann außerdem die Ummantelung als Teil des Entlüftungskanals eine außen liegende, in Achsrichtung verlaufende Nut mit einer quer zur Achsrichtung verlaufenden Verbindungsöffnung auf, die mit der seitlichen Öffnung des Kontakt-Anzeige-Moduls fluchtet. Die Verbindungsöffnung in der Ummantelung kann beispielsweise durch eine Bohrung erzeugt werden. Durch diese Bohrung kann gleichzeitig auch die seitliche Öffnung in das Kontakt-Anzeige-Modul eingebracht werden.

Bei einer alternativen Variante kann auf die vorbeschriebene Nut verzichtet und in besonders eleganter Weise ein Austritt des Verguss- oder Ausschäummaterials unterbunden werden. Hierbei weist die Ummantelung erfindungsgemäß eine Mehrzahl von Dichtringen auf zum Abdichten gegenüber einer beim Zusammenbau des Gehäuses über einen Teilbereich der Ummantelung zu schiebenden Gehäusehülse. Zum Bereitstellen einer Belüftungsöffnung sind dabei mindestens zwei der Dichtringe mit mindestens einer axialen Durchbrechung versehen.

Zweckmäßig ist nun der vorbeschriebene Entlüftungskanal so ausgebildet, dass dessen Austrittsöffnung an der Ummantelung innerhalb des innersten mit einer axialen Durchbrechung versehenen Dichtungsrings ausgebildet ist. Als außen liegend werden hierbei das Anschlusskabel und als innen liegend die Kontaktstifte des Kontakt-Anzeige-Moduls angesehen.

Der hier zugrunde liegende Kerngedanke ist darin zu sehen, dass eventuell aus dem Entlüftungskanal beim Zusammenbau des Geräts austretendes Verguss- oder Ausschäummaterial, um tatsächlich ganz nach außen austreten zu können, eine sehr lange Wegstrecke durchlaufen müsste und dementsprechend vorher abbindet oder aushärtet.

Erfindungsgemäß weisen mindestens zwei Dichtringe eine axiale Durchbrechung auf, wobei diese Durchbrechungen der Dichtringe in Umlaufrichtung zueinander versetzt, insbesondere einander gegenüberliegend, vorgesehen sind.

Eventuell aus der Entlüftungsöffnung austretendes Verguss- oder Ausschäummaterial müsste bei diesem Ausführungsbeispiel, um tatsächlich nach außen austreten zu können, zunächst durch die, zweckmäßigerweise mit geringer Durchtrittsfläche ausgebildete, Durchbrechung des inneren Dichtrings durchtreten, und müsste sich im Anschluss zwischen Gehäusehülse und Ummantelung in Umlaufrichtung bis zur Durchbrechung des außen liegenden Dichtrings fortbewegen. Dieser Weg ist sehr lang und das Verguss- oder Ausschäummaterial hat ausreichend Möglichkeit, mit Luftsauerstoff in Kontakt zu kommen, so dass ein Aushärten oder Abbinden gewährleistet und damit ein Austritt des Verguss- oder Ausschäummaterials zuverlässig verhindert werden kann.

Bei einer weiteren bevorzugten Ausgestaltung ist die Leuchtdiode in eine im Kontakt-Anzeige-Modul vorgesehene Ausnehmung eingesetzt. Besonders einfach kann dies realisiert sein durch eine in dem Kontakt-Anzeige-Modul gebildete axiale Sacköffnung.

Zweckmäßig erfolgt das Einsetzen der Leuchtdiode erst nach dem Umspritzen von Kabel und Kontakt-Anzeige-Modul mit der Ummantelung.

Bevorzugt ist in diesem Zusammenhang außerdem, wenn sich die Kontaktstifte und Anschlüsse der Leuchtdiode im Vormontagezustand in Richtung des Elektronikgehäuses erstrecken. Zur Montage der Sensor-Baueinheit braucht dann der erfindungsgemäße Gehäuseabschluss nur auf die Platine aufgesteckt zu werden. Sodann können die Kontaktstifte und die Anschlüsse der Leuchtdiode mit den entsprechenden Anschlüssen auf der Leiterplatte verbunden werden. Prinzipiell kann dies bereits durch eine klemmende Kontaktierung realisiert werden. Eine brauchbare mechanische und elektrische Stabilität wird jedoch erst erzielt, wenn die Kontakte jeweils verlötet werden.

Weitere Vorteile und Eigenschaften der vorliegenden Erfindung werden nachstehend unter Bezug auf die beigefügten schematischen Figuren erläutert. Hierin zeigt
- Fig. 1: ein erstes Ausführungsbeispiel eines erfindungsgemäßen Gehäuseabschlusses;
- Fig. 2: eine teilweise geschnittene Ansicht des Ausführungsbeispiels aus Fig. 1;
- Fig. 3: eine Ansicht des Kontakt-Anzeige-Moduls des Ausführungsbeispiels aus Fig. 1 mit einem Anschlusskabel;
- Fig. 4: eine weitere, teilweise geschnittene Ansicht des Ausführungsbeispiels aus Fig. 1;
- Fig. 5: Komponenten eines Sensors mit einem erfindungsgemäßen Gehäuseabschluss vor dem Zusammenbau;
- Fig. 6: einen zusammengebauten Sensor in teilweise geschnittener Ansicht mit einem erfindungsgemäßen Gehäuseabschluss;
- Fig. 7 u. Fig. 8: perspektivische Ansichten eines Kontakt-Anzeige-Moduls vor dem Zusammenbau;
- Fig. 9: eine perspektivische Ansicht eines alternativen Ausführungsbeispiels eines erfindungsgemäßen Gehäuseabschlusses;
- Fig. 10 u. Fig. 11: weitere Ansichten von gegenüberliegenden Seiten des Gehäuseabschlusses aus Fig. 9; und
- Fig. 12: eine teilweise, entlang der Linie A-A aus Fig. 11 geschnittene Ansicht des erfindungsgemäßen Gehäuseabschlusses aus Fig. 9.

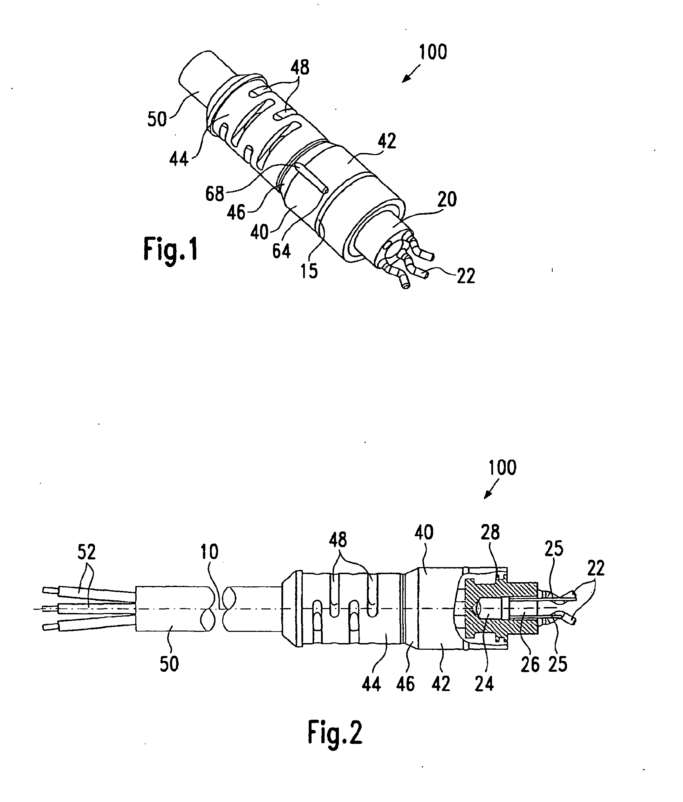

Ein Ausführungsbeispiel eines erfindungsgemäßen Gehäuseabschlusses 100 ist in den Fig. 1, 2 und 4 schematisch dargestellt. Identische Komponenten sind dort jeweils mit denselben Bezugszeichen gekennzeichnet. Der erfindungsgemäße Gehäuseabschluss weist als wesentliche Bestandteile ein Kontakt-Anzeige-Modul 20, ein daran angeschlossenes Anschlusskabel 50 und eine Ummantelung 40 auf, die erfindungsgemäß einen Endbereich 54 des Kabels 50 und, wenigstens teilweise, das Kontakt-Anzeige-Modul 20 umgibt.

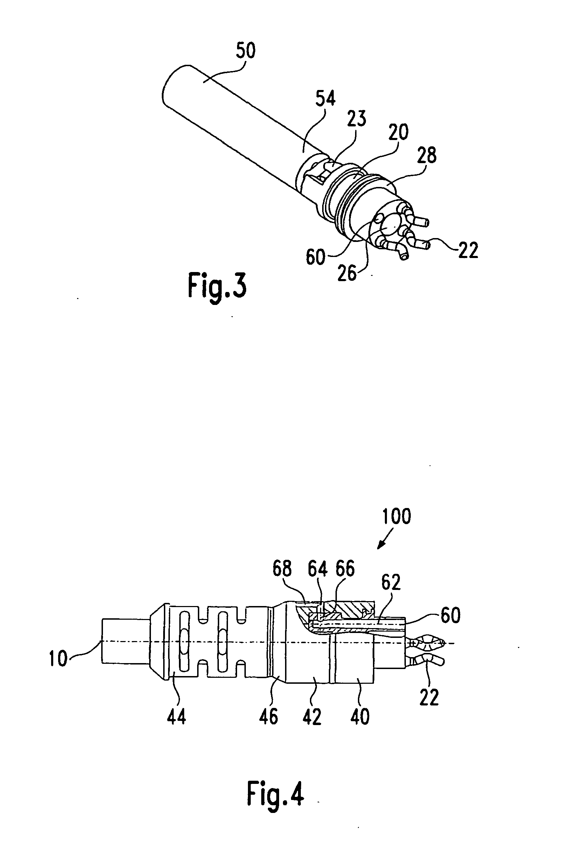

Fig. 3 zeigt das mit dem Kontakt-Anzeige-Modul 20 verbundene Anschlusskabel 50 vor dem Anbringen der Ummantelung 40. Das Kontakt-Anzeige-Modul 20 ist im Wesentlichen ein aus einem transparenten Material gespritztes Kunststoffteil, in dem die Kontaktelemente 22 aufgenommen sind. Hierbei handelt es sich im gezeigten Beispiel um Kontaktstifte, die zum Verlöten an einer Leiterplatte bereits geeignet gebogen sind. Das Kontakt-Anzeige-Modul 20 weist eine im Wesentlichen zylindrische Form auf, wobei zur mechanischen Stabilisierung und zur Bereitstellung einer zugfesten Verbindung an der Außenseite eine Mehrzahl von Profilierungen 28 vorgesehen sind.

In Fig. 2 ist gezeigt, wie die Ummantelung 40 diese Profilierungen 28 umgreift. Aus den Fig. 2 und 3 ist ersichtlich, dass eine Leuchtdiode 24 als Leuchtelement in eine Ausnehmung 26 im Kontakt-Anzeige-Modul 20 eingesetzt ist. Bei der Ausnehmung 26 handelt es sich im gezeigten Beispiel um eine axiale, zentrische Sacköffnung, in welche die Leuchtdiode 24, bevorzugt nach dem Anbringen der Ummantelung, eingesetzt ist. Fig. 2 zeigt außerdem, in welcher Weise die Anschlüsse 25 der Leuchtdiode 24 und die Kontaktstifte 22 sich in Axialrichtung 10 in Richtung des Gehäuses erstrecken.

Die Ummantelung 40, die bevorzugt durch Umspritzen des Endbereichs 54 des Kabels 50 und des Kontakt-Anzeige-Moduls 20 angebracht wird, besteht im dargestellten Ausführungsbeispiel aus einem gehäusenahen Anschlussbereich 42 mit größeren Durchmesser, einem gehäusefernen Kabelansatz 44 mit kleinerem Durchmesser und einem hier konisch ausgebildeten Übergangsbereich 46. Der Kabelansatz 44 ist zur Bereitstellung einer größeren Flexibilität mit einer Mehrzahl von Langlöchern 48 versehen, die sich in Umfangsrichtung erstrecken. Der konische Übergangsbereich 46 dient, dies wird weiter unten noch genauer erläutert, zum Abstützen eines umbördelten Rands einer Gehäusehülse.

Die Ummantelung 40 ist erfindungsgemäß ebenfalls aus einem transparenten Material gefertigt, so dass das Licht der Leuchtdiode 24 besonders gut von einem Benutzer beobachtet werden kann.

Zum Abdichten des erfindungsgemäßen Gehäuseabschlusses 100 gegenüber einer beim Zusammenbau eines elektronischen Gehäuses über den gehäusenahen Anschlussbereich 42 zu schiebenden Gehäusehülse ist im gehäusenahen Anschlussbereich 42 der Ummantelung 40 ein umlaufender Dichtring 15 vorgesehen.

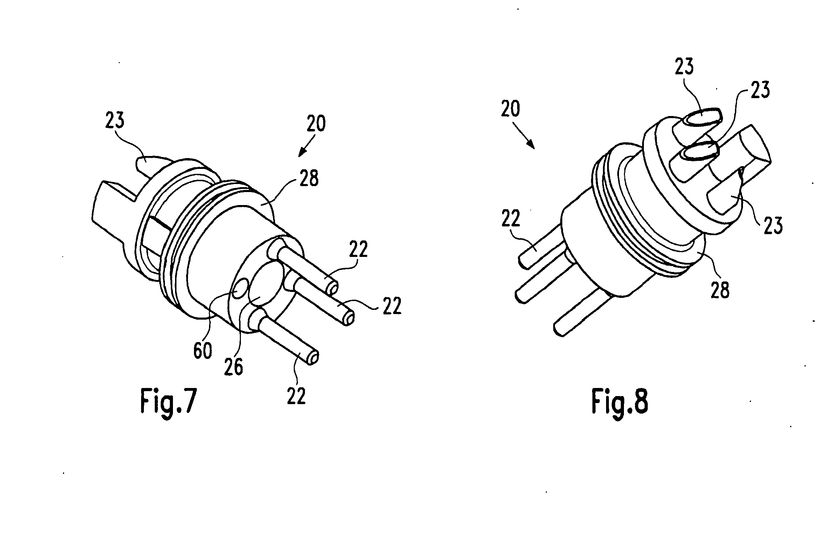

In den Fig. 7 und 8 ist das Kontakt-Anzeige-Modul in separaten perspektivischen Ansichten dargestellt. Die Kontaktstifte 22 befinden sich hier noch in einem ungebogenen Ausgangszustand. Besonders gut erkennbar sind in diesen Ansichten die Ausnehmung 26 zur Aufnahme einer Leuchtdiode, ein Entlüftungskanal 60 sowie, auf einer Rückseite des Kontakt-Anzeige-Moduls 20 im gezeigten Beispiel, insgesamt drei Lötbuchsen 23.

Mit diesen Lötbuchsen 23, die auf der den Kontaktstiften 22 gegenüberliegenden Seite des Kontakt-Anzeige-Moduls 20 aus diesem herausragen, sind die einzelnen Adern 52 des Kabels 50 verbunden, siehe Fig. 3.

Ein weiteres wesentliches technisches Merkmal des Kontakt-Anzeige-Moduls 20 und der umgebenden Ummantelung 40 ist ein in Fig. 4 im Detail in einer Teilschnittansicht gezeigter Entlüftungskanal 60. Dieser Entlüftungskanal 60 besteht zunächst aus einer in dem Kontakt-Anzeige-Modul 20 ausgebildeten Sacköffnung 62, die aus fertigungstechnischen Gründen eine leicht konische Form aufweist. Im weiteren Verlauf setzt sich der Entlüftungskanal 60 zusammen aus einer seitlichen Öffnung 66 im Kontakt-Anzeige-Modul 20 und einer damit fluchtenden Verbindungsöffnung 64 in der Ummantelung 40. Die Verbindungsöffnung 64 in der Ummantelung 40 und die seitliche Öffnung 66 in dem Kontakt-Anzeige-Modul 20 werden durch eine Bohrung erzeugt. Die Verbindungsöffnung 64 mündet in eine außen liegende, sich in Achsrichtung 10 erstreckende Nut 68. Aus Fig. 1 ist ersichtlich, dass diese Nut 68 ihrerseits in dem konischen Übergangsbereich 46 der Ummantelung 40 endet. Ein überbördelter Rand einer Gehäusehülse, der sich an dem konischen Bereich 46 der Ummantelung 40 abstützt, verschließt demgemäß die Nut 68.

Bevorzugt wird die Länge der Gehäusehülse so dimensioniert, dass auch bei umgebördeltem Rand der konische Bereich 46 nicht vollständig verdeckt wird. Auf diese Weise kann die Leuchtdiode 24 auch von hinten, das heißt aus Richtung des Kabelabgangs in einem großen Polarwinkelbereich über den gesamten Azimutalwinkel beobachtet werden. Die gute Rundumsichtbarkeit des Leuchtelements bei dem erfindungsgemäßen Gehäuseabschluss ist ein weiterer wesentlicher Vorteil der Erfindung.

Durch den umbördelten Rand einer Gehäusehülse werden außerdem die Kabelabzugskräfte und somit die Gesamtstabilität erhöht.

In die Entlüftungsbohrung 62 des Kontakt-Anzeige-Moduls 20 kann ein Filzelement eingelegt werden, welches die Luft entweichen lässt, das Aufschäumen des in das Gehäuse eingefüllten Schaumharzes jedoch begrenzt. Es wird also durch den Filz ein Aufschäumstopp bereitgestellt und eine Reinigung eines auf diese Weise gefertigen Sensors von überschüssigen Harzresten kann somit entfallen.

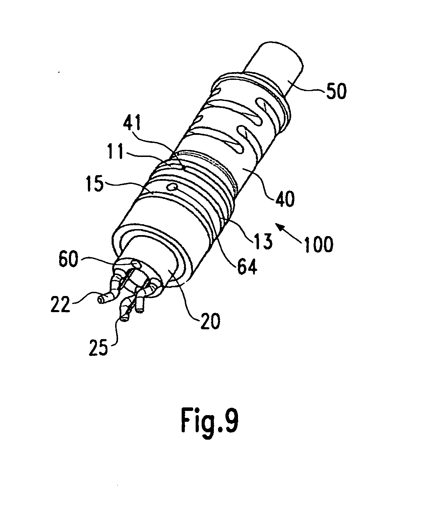

Ein alternatives Ausführungsbeispiel eines erfindungsgemäßen Gehäuseabschlusses 100 wird mit Bezug auf die Fig. 9 bis 12 beschrieben. Für äquivalente Komponenten werden dort jeweils dieselben Bezugszeichen wie in den Fig. 1 bis 6 verwendet. Bei dem in Fig. 9 bis 12 gezeigten Beispiel ist eine alternative, besonders elegante Möglichkeit der Entlüftung realisiert. Im wesentlichen Unterschied zu dem in den Fig. 1 bis 4 gezeigten Ausführungsbeispiel weist bei dieser Variante die Ummantelung nicht nur einen umlaufenden Dichtring 15, sondern darüber hinaus zwei weitere Dichtringe 11, 13 auf. Diese Dichtringe 11, 13, welche bezüglich des umlaufenden Dichtrings 15 außen, das heißt in Richtung des Anschlusskabels 50 liegen, sind jeweils mit einer axialen Durchbrechung 41, beziehungsweise 43 versehen. Dies ist in den Fig. 9 bis 11 erkennbar.

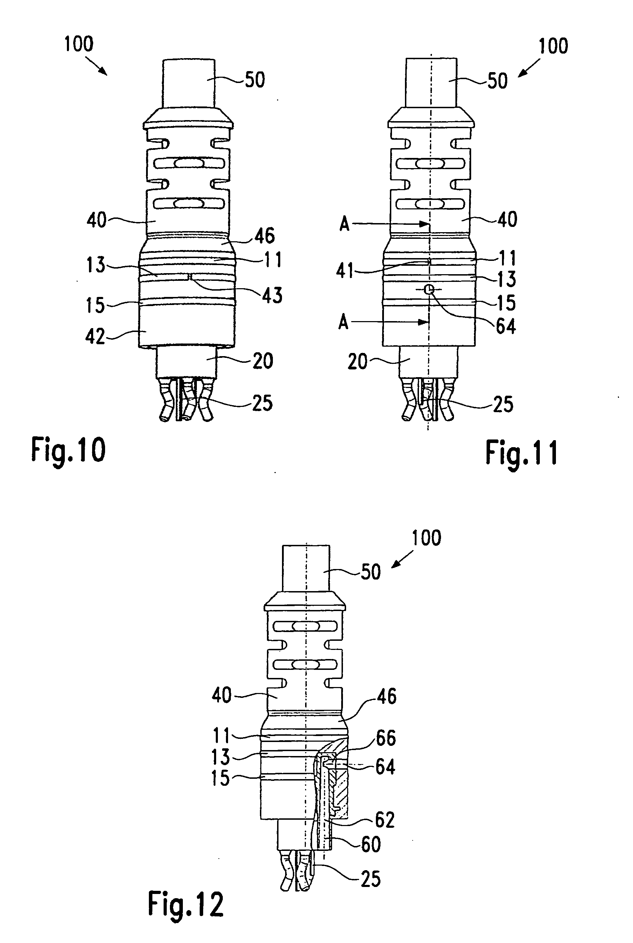

Das alternative Entlüftungsprinzip besteht darin, dass die Ummantelung 40 im gehäusenahen Abschnitt 42 im Bereich zwischen dem Durchstich, also der Verbindungsöffnung 64 zum Entlüftungskanal 62 des Kontakt-Anzeige-Moduls 20 und dem konischen Absatz 46 mehrere Dichtringe 11, 13 aufweist, die abwechselnd gegenüberliegend durchbrochen sind. Ein weiterer, innen liegender Dichtring 15 ist, wie auch bei dem vorbeschriebenen Ausführungsbeispiel vor dem Durchstich in Richtung Leiterplatte zur Abdichtung des zu füllenden Sensor-Hohlraums vorhanden. Eventuell aus dem Entlüftungskanal 60 über die Durchgangsöffnung 64 austretende Masse muss sich somit zwischen dem umlaufenden Dichtring 15 und dem ersten unterbrochenen Dichtring 13 auf die dem Durchstich 64 gegenüberliegende Seite vorarbeiten, da dort die Durchbrechung 43 des Dichtrings 13 liegt. Von dort aus muss sich das austretende Material, um tatsächlich ganz nach außen austreten zu können, zwischen dem ersten durchbrochenen Dichtring 13 und dem zweiten durchbrochenen Dichtring 11 wieder zurückbewegen auf die Seite des Durchstichs 64, wo auch der zweite Dichtring 11 mit einer Durchbrechung 41 versehen ist. Aufgrund des von dem Verguss- oder Ausschäummaterial zurückzulegenden Wegs kann dieses Prinzip auch als Mäander-Entlüftung bezeichnet werden. Die einander gegenüberliegende Anordnung der Durchbrechungen 41, 43 der Dichtringe 11, 13 ist aus den Fig. 10 und 11, die gegenüberliegende Seiten des Gehäuseabschlusses zeigen, ersichtlich.

In Fig. 12 ist gezeigt, wie die Verbindungsöffnung 64, die auch als Durchstich bezeichnet werden kann, zwischen dem umlaufenden Dichtring 15 und dem ersten durchbrochenen Dichtring 13 angeordnet ist. Außerdem ist bei dem in den Fig. 9 bis 12 gezeigten Beispiel jeweils bereits eine Leuchtdiode in das Kontakt-Anzeige-Modul 20 eingesetzt, deren Anschlüsse 25 nach außen in Richtung des Gehäuses vorragen.

Eine axiale Nut ist bei dieser Variante nicht erforderlich. Ein weiterer besonderer Vorteil dieses Ausführungsbeispiels ist darin zu sehen, dass kein Filz- oder sonstiges Gewebe-Material eingesetzt werden muss. Insbesondere in verfahrensmäßiger Hinsicht werden also weitere Vereinfachungen und damit Kostenvorteile erzielt.

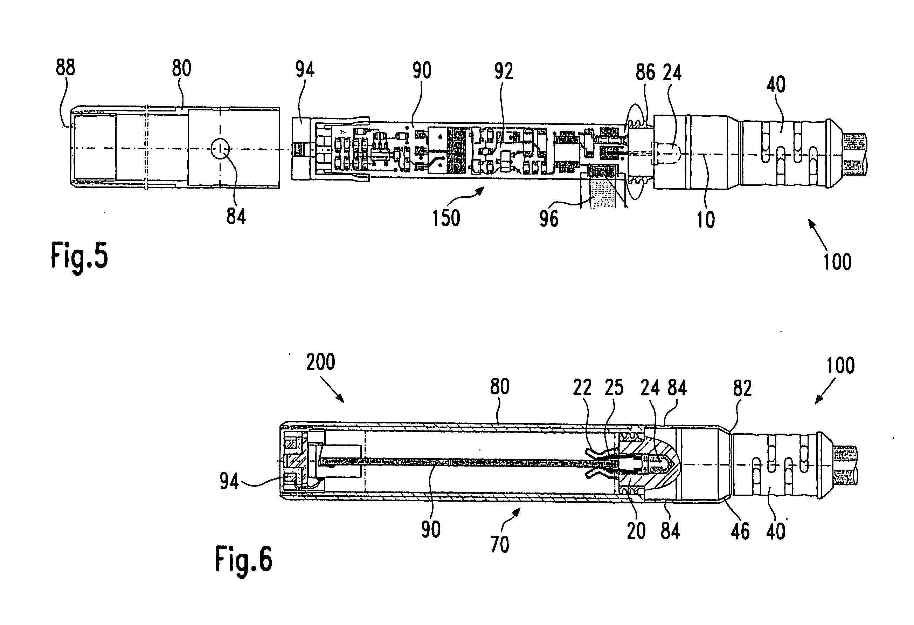

Der Zusammenbau eines Sensors mit einem erfindungsgemäßen Gehäuseabschluss 100 wird mit Bezug auf die Figuren 5 und 6 erläutert. Dabei wird nach dem Prinzip einer einzügigen Montage gearbeitet. Dies beinhaltet im Wesentlichen nur das Einschieben einer Sensor-Baueinheit 150 in eine zylindrische Gehäusehülse 80, die an einem Ende durch einen Becher 88, der auch als Frontkappe bezeichnet werden kann, abgeschlossen ist. Die Sensor-Baueinheit 150, welche in die Gehäusehülse 80 eingeschoben wird, ist in Fig. 5 schematisch dargestellt. Wesentlicher Bestandteil dieser Sensor-Baueinheit 150 ist ein erfindungsgemäßer Gehäuseabschluss 100, der an einer ersten Schmalseite einer länglichen Leiterplatte 90 angeordnet ist. Die Kontaktstifte 22 und die Anschlüsse 25 der Leuchtdiode 24 sind mit der Leiterplatte 90 verlötet. Auf der dem Gehäuseabschluss 100 gegenüberliegenden Schmalseite der Leiterplatte 90 ist ein Sensorelement 94 angeordnet, wobei es sich im gezeigten Beispiel um eine Spule mit einem Ferritelement handelt. Grundsätzlich kann hier aber jede Art von Sensorelement eingesetzt werden. Schematisch angedeutet ist in Fig. 5 außerdem eine Abschirmfolie 96, welche vor der Endmontage, also vor dem Einschieben der Sensor-Baueinheit 150 in die Gehäusehülse 80, um die Schaltung 92 gewickelt werden kann. Beim Einschieben der Sensor-Baueinheit 150 in die zylindrische Gehäusehülse 80 kann gleichzeitig das Ausschäummaterial eingebracht werden. Alternativ kann das Ausschäummaterial bereits vor dem Einschieben der Sensor-Baueinheit 150 in die zylindrische Gehäusehülse 80 gefüllt werden. Wie vorstehend erläutert, kann dann die im Gehäuseinneren noch vorhandene Luft durch den Entlüftungskanal 60 entweichen. Zur Fertigstellung des Sensors 200 wird dann ein Rand 82 der Gehäusehülse 80 umbördelt, so dass er sich am konischen Übergangsbereich 46 der zylindrischen Ummantelung 40 abstützt und auf diese Weise die Nut 68 verschließt. Dies ist in Fig. 6 in einer geschnittenen Querschnittsansicht dargestellt.

In der Gehäusehülse 80 sind eine Mehrzahl von seitlichen Öffnungen 84 vorgesehen, durch welche Licht der Leuchtdiode 24 auch seitlich beobachtet werden kann. Wie vorstehend erläutert, kann das Licht der Leuchtdiode 24 aber auch aus Richtung des Kabelabgangs in einem großen Polarwinkel und über den gesamten Azimutalwinkel beobachtet werden.

Zwischen Gehäuseabschluss 100 und Gehäusehülse 80 ist ein Dichtelement 86, das beispielsweise aus einem flexiblen Kunststoff bestehen kann, vorgesehen.

Bei der Montage wird also der erfindungsgemäße Gehäuseabschluss 100 mitsamt Kabel 50 und LED 24 auf die Leiterplatte 90, auf der eine Sensorspule bereits montiert ist, aufgesetzt und verlötet. Danach wird die so gebildete Sensor-Baueinheit 150 in das mit der passenden Menge Schaumharz zu befüllende oder bereits befüllte Gehäuse 70 eingeschoben. Die Entlüftung über den Entlüftungskanal 60 sorgt sowohl bei dem letzten Teil des Einschiebens als auch beim allmählichen Aufschäumen des Harzes für den notwendigen Volumenausgleich.

Mit der vorliegenden Erfindung wird eine Baugruppe für eine modulare Montagetechnik, nämlich ein Gehäuseabschluss für Elektronikgehäuse bereitgestellt, der für die Endmontage eines Sensors bereits weitestgehend vorbereitet ist. Der erfindungsgemäße Gehäuseabschluss beinhaltet eine Leuchtanzeige sowie eine Kabeldurchführung und erlaubt in bevorzugten Varianten insbesondere eine definierte Entlüftung des Sensorgehäuses beim Ausschäumen nach der Endmontage. Zum Erreichen hoher Kabelabzugskräfte kann ein hinterer Rand einer Gehäusehülse umbördelt werden und sich an einem Durchmesser-Übergangsbereich der Ummantelung abstützen.

Durch den erfindungsgemäßen Gehäuseabschluss wird also eine Einheit aus Kabelabgang, Leuchtanzeige und mechanischem Gehäuseverschluss bereitgestellt.

Die Komponenten des erfindungsgemäßen Gehäuseabschlusses können jeweils besonders einfach, beispielsweise durch Spritzguss gefertigt werden. Durch das Umspritzen von Kontakt-Anzeige-Modul und Endbereich des Kabels können außerdem eine hohe Dichtigkeit der Gesamtanordnung und damit eine gute elektrische und mechanische Stabilität erreicht werden. Ein wesentlicher Vorteil des erfindungsgemäßen Gehäuseabschlusses besteht insbesondere in den mit einfachen Mitteln zu erzielenden hohen Kabelabzugskräften. Durch den Entlüftungskanal kann beim Ausschäumen nach der Endmontage überschüssige Luft entweichen. Ein selbständiger Ausschäum-Stopp bei Erreichen des Entlüftungskanals kann durch ein optional eingelegtes Filzelement erreicht werden. Bei einer alternativen Variante kann auf ein solches Gewebestückchen verzichtet werden, wobei hier eine Mehrzahl von jeweils auf gegenüberliegenden Seiten unterbrochenen Dichtringen vorgesehen ist. Eventuell austretendes Verguss- oder Ausschäummaterial härtet dann aus, bevor es tatsächlich nach außen austreten kann. Die Zustandsanzeige durch die LED kann sowohl seitlich als auch von hinten hervorragend vom Benutzer beobachtet werden.

Insgesamt wird durch den erfindungsgemäßen Gehäuseabschluss eine erhebliche Verbesserung im Hinblick auf die modulare Montagetechnik erzielt, da nur noch sehr wenige Verfahrensschritte notwendig sind. Hierdurch können in erheblichem Umfang Kosten gespart werden.

## Patentansprüche

1. Gehäuseabschluss für Elektronikgehäuse, insbesondere Sensorgehäuse,
mit mehreren Kontaktelementen (22) zum Kontaktieren einer in dem Elektro- nikgehäuse (70) aufgenommenen Schaltung (92),
mit einem Anschlusskabel (50) mit mehreren Adern (52), die jeweils mit den Kontaktelementen (22) verbunden sind, und
mit mindestens einem Leuchtelement, insbesondere einer Leuchtdiode (24), zum Bereitstellen einer optischen Anzeige für einen Benutzer, wobei
die Kontaktelemente (22) und das Leuchtelement (24) in einem wenigstens teilweise transparenten Kontakt-Anzeige-Modul (20) untergebracht sind, dass das Kontakt-Anzeige-Modul (20) zusammen mit einem Endbereich (54) des Anschlusskabels (50) zur mechanischen Stabilisierung und elektrischen Isolierung von einer wenigstens teilweise transparenten, einstückig gefertigten Ummantelung (40) wenigstens teilweise umgeben ist, so dass das Anschlusskabel (50) mit dem Kontakt-Anzeige-Modul (20) zugfest verbunden ist,
wobei die Ummantelung (40) eine Mehrzahl von Dichtringen (11, 13, 15) aufweist zum Abdichten gegenüber einer über einen Teilbereich der Ummantelung (40) zu schiebenden Gehäusehülse (80) und
wobei zum Bereitstellen einer Entlüftungsöffnung mindestens zwei der Dichtringe (11, 13, 15) mit mindestens einer axialen Durchbrechung (41, 43) versehen sind, wobei die Durchbrechungen (41, 43) der Dichtringe (11, 13) in Umlaufrichtung zueinander versetzt, insbesondere einander gegenüberliegend, vorgesehen sind.

2. Gehäuseabschluss nach Anspruch 1,
wobei
die Ummantelung (40) einen durchmessergrößeren gehäusenahen Anschlussbereich (42) und einen durchmesserkleineren gehäusefernen Kabelansatz (44) aufweist, wobei ein Übergang (46) zwischen Anschlussbereich (42) und Kabelansatz (44) für einen zugfesten hintergreifenden Eingriff mit einer Gehäusehülse (80) ausgebildet ist.

3. Gehäuseabschluss nach einem der Ansprüche 1 oder 2,
wobei
die Leuchtdiode (24) in eine im Kontakt-Anzeige-Modul (20) vorgesehene Ausnehmung (26) eingesetzt ist.

4. Gehäuseabschluss nach Anspruch 3,
wobei
die Ausnehmung (26) für die Leuchtdiode (24) eine axiale Sacköffnung in dem Kontakt-Anzeige-Modul (20) ist.

5. Gehäuseabschluss nach einem der Ansprüche 1 bis 4,
wobei die Kontaktelemente Kontaktstifte (22) sind und
wobei sich die Kontaktstifte (22) und Anschlüsse (25) der Leuchtdiode (24) im Vormontagezustand in Richtung des Elektronikgehäuses (70) erstrecken.

6. Gehäuseabschluss nach einem der Ansprüche 1 bis 5,
wobei
in dem Kontakt-Anzeige-Modul (20) und/oder in der Ummantelung (40) ein Entlüftungskanal (60) ausgebildet ist.

7. Gehäuseabschluss nach Anspruch 6,
wobei
in dem Entlüftungskanal (60) ein halbdurchlässiges Element, insbesondere ein Filzelement, angeordnet ist, welches für Luft durchlässig und für ein einzusetzendes Ausschäum- oder Vergussmaterial undurchlässig ist.

8. Gehäuseabschluss nach Anspruch 6 oder 7,
wobei
das Kontakt-Anzeige-Modul (20) als Teil des Entlüftungskanals (60) eine sich in Achsrichtung (10) erstreckende Sackbohrung (62) mit einer quer zur Achsrichtung (10) verlaufenden seitlichen Öffnung (66) aufweist.

9. Gehäuseabschluss nach einem der Ansprüche 6 bis 8,
wobei
die Ummantelung (40) als Teil des Entlüftungskanals (60) eine außen liegende, in Achsrichtung (10) verlaufende Nut (68) mit einer quer zur Achsrichtung (10) verlaufenden Verbindungsöffnung (64) aufweist, die mit der seitlichen Öffnung (66) des Kontakt-Anzeige-Moduls (20) fluchtet.

10. Gehäuseabschluss nach einem der Ansprüche 1 bis 9,
wobei
die Ummantelung (40) durch Umspritzen des Kontakt-Anzeige-Moduls (20) und des Endbereichs (54) des Anschlusskabels (50) gefertigt ist.

11. Gehäuseabschluss nach einem der Ansprüche 1 bis 10,
wobei
das Kontakt-Anzeige-Modul (20) zum Bereitstellen einer zugfesten Verbindung mit der Ummantelung (40) wenigstens eine, insbesondere umlaufende, Profilierung (28) aufweist.

12. Sensor-Baueinheit mit einem Gehäuseabschluss (100) nach einem der Ansprüche 1 bis 11,
mit einer auf einer Leiterplatte (90) angeordneten elektronischen Schaltung (92), wobei die Kontaktstifte (22) und die Anschlüsse des Leuchtelements, insbesondere der Leuchtdiode (24), des Gehäuseabschlusses (100) mit der Leiterplatte (90) verbunden, insbesondere verlötet, sind, und
mit einem an der Leiterplatte (90) dem Gehäuseabschluss (100) gegenüberliegend angeordneten Sensorelement (94), insbesondere einer Spule mit einem Ferritelement.

13. Sensor, insbesondere Näherungsschalter, mit einer Sensor-Baueinheit (150) nach Anspruch 12,
die in eine Gehäusehülse (80) eingeschoben ist, wobei die Gehäusehülse (80) an einer dem Gehäuseabschluss (100) gegenüberliegenden Seite mit einer Frontkappe (88) abgeschlossen ist.

14. Sensor nach Anspruch 13,
wobei
die Gehäusehülse (80) mit dem Gehäuseabschluss (100) durch einen umbördelten Rand (82) der Gehäusehülse (80) zugfest verbunden ist.

15. Verfahren zur Herstellung eines Endabschlusses für Elektronikgehäuse, insbesondere Sensorgehäuse, insbesondere nach einem der Ansprüche 1 bis 14,
bei dem die Adern (52) eines Anschlusskabels (50) mit Kontaktelementen (22), insbesondere Kontaktstiften (22), verbunden werden, die in einem wenigstens teilweise transparenten Kontakt-Anzeige-Modul (20) aufgenommen sind,
bei dem ein Leuchtelement, insbesondere eine Leuchtdiode (24), in eine in dem Kontakt-Anzeige-Modul (20) hierfür vorgesehene Ausnehmung (26) eingesetzt wird,
bei dem um das Kontakt-Anzeige-Modul (20) und einen Endbereich (54) des Anschlusskabels (50) zur elektrischen Isolierung und mechanischen Stabilisierung eine wenigstens teilweise transparente, einstückige Ummantelung (40) angebracht wird,
bei dem die Ummantelung (40) eine Mehrzahl von Dichtringen (11, 13, 15) aufweist zum Abdichten gegenüber einer über einen Teilbereich der Ummantelung (40) zu schiebenden Gehäusehülse (80),
bei dem zum Bereitstellen einer Entlüftungsöffnung mindestens zwei der Dichtringe (11, 13, 15) mit mindestens einer axialen Durchbrechung (41, 43) versehen sind, wobei die Durchbrechungen (41, 43) der Dichtringe (11, 13) in Umlaufrichtung zueinander versetzt, insbesondere einander gegenüberliegend, vorgesehen sind.

16. Verfahren nach Anspruch 15,
wobei
die Ummantelung (40) durch Umspritzen des Kontakt-Anzeige-Moduls (20) und des Endbereiches (54) des Anschlusskabels (50) angebracht wird.

17. Verfahren nach einem der Ansprüche 15 oder 16,
wobei
in die Ummantelung (40) und/oder in das Kontakt-Anzeige-Modul eine Entlüftungsbohrung eingebracht wird.

## Claims

1. Casing termination for electronic casing, particularly sensor casing, with several contact elements (22) for contacting a circuit (92) received in the electronic casing (70),
with a connecting cable (50) having several conductors (52) which, in each case, are connected to contact elements (22) and
with at least one lighting element, particularly a light emitting diode (24), for providing an optical display for a user,
wherein
the contact elements (22) and lighting element (24) are housed in an at least partly transparent contact display module (20) and
the contact display module (20) together with an end region (54) of the connecting cable (50) are at least partly surrounded by an at least partly transparent, integrally manufactured envelope (40) for mechanical stabilization and electrical insulation purposes, so that the connecting cable (50) is connected in tension-proof manner to the contact display module (20),
wherein the envelope (40) has a plurality of sealing rings (11, 13, 15) for sealing with respect to a casing sleeve (80) to be engaged over a partial area of envelope (40) and
wherein for providing an air duct at least two of the sealing rings (11, 13, 15) are provided with at least one axial opening (41, 43), wherein the openings (41, 43) of the sealing rings (11, 13) are mutually offset in the circumferential direction and in particular on opposite sides to one another.

2. Casing termination according to claim 1,
wherein
the envelope (40) has a casing-near connecting area with a larger diameter (42) and a casing-remote cable extension with a smaller diameter (44), a transition (46) between connecting area (42) and cable extension (44) being constructed for a tension-proof back-engagement with a casing sleeve (80).

3. Casing termination according to one of the claims 1 or 2,
wherein
the light emitting diode (24) is inserted in a recess (26) provided in the contact display module (20).

4. Casing termination according to claim 3,
wherein
the recess (26) for the light emitting diode (24) is an axial blind hole in the contact display module (20).

5. Casing termination according to one of the claims 1 to 4,
wherein
the contact elements are contact pins (22) and
wherein the contact pins (22) and terminals (25) of the light emitting diode (24) extend in the preassembly state in the direction of the electronic casing (70).

6. Casing termination according to one of the claims 1 to 5,
wherein
an air duct (60) is formed in the contact display module (20) and/or in the envelope (40).

7. Casing termination according to claim 6,
wherein
a semipermeable element, particularly a felt element, is placed in air duct (60) and which is permeable to air and impermeable to a foaming or casting material to be introduced.

8. Casing termination according to claim 6 or 7,
wherein
as part of the air duct (60) the contact display module (20) has a blind hole (62) extending in axial direction (10) with a lateral opening (66) transverse to axial direction (10).

9. Casing termination according to one of the claims 6 to 8,
wherein,
as part of the air duct (60), the envelope (40) has an outer groove (68) running in axial direction (10) with a connecting opening (64) transverse to axial direction (10) and which connecting opening (64) is aligned with the lateral opening (66) of the contact display module (20).

10. Casing termination according to one of the claims 1 to 9,
wherein
the envelope (40) is manufactured by moulding the contact display module (20) and end region (54) of connecting cable (50).

11. Casing termination according to one of the claims 1 to 10,
wherein
for providing a tension-proof connection to the envelope (40), the contact display module (20) has at least one, more particularly circumferential, profiling (28).

12. Sensor module having a casing termination (100) according to one of the claims 1 to 11,
with an electronic circuit (92) placed on a printed circuit board (90), the contact pins (22) and terminals of the lighting element, particularly the light emitting diode (24), of the casing termination (100) being connected, more particularly soldered to the printed circuit board (90) and
with a sensor element (94), particularly a coil with a ferrite element, facing the casing termination (100) on the printed circuit board (90).

13. Sensor, particularly proximity switch, with a sensor assembly (150) according to claim 12,
which is inserted in a casing sleeve (80), the latter being closed by a front cap (88) on the opposite side to the casing termination (100).

14. Sensor according to claim 13,
wherein
the casing sleeve (80) is connected in tension-proof manner to casing termination (100) by a flanged edge (82) of casing sleeve (80).

15. Method for the manufacture of a casing termination for an electronic casing, particularly sensor casing, particularly according to one of the claims 1 to 14, in which the conductors (52) of a connecting cable (50) are connected to contact elements (22), particularly contact pins (22), which are received in an at least partly transparent contact display module (20),
in which a lighting element, particularly a light emitting diode (24), is inserted in a recess (26) provided for this purpose in the contact display module (20) and in which an at least partly transparent, integral envelope (40) is fitted round the contact display module (20) and an end region (54) of the connecting cable (50) for electrical insulation and mechanical stabilization purposes,
in which the envelope (40) has a plurality of sealing rings (11, 13, 15) for sealing with respect to a casing sleeve (80) to be engaged over a partial area of the envelope (40),
in which for providing an air duct at least two of the sealing rings (11, 13, 15) are provided with at least one axial opening (41, 43), wherein the openings (41, 43) of the sealing rings (11, 13) are mutually offset in the circumferential direction and in particular on opposite sides to one another.

16. Method according to claim 15,
wherein
the envelope (40) is fitted by moulding the contact display module (20) and the end region (54) of the connecting cable (50).

17. Method according to one of the claims 15 or 16,
wherein
an air duct is formed in envelope (40) and/or in the contact display module.n

## Revendications

1. Fermeture de boîtier pour boîtier électronique, plus particulièrement pour boîtier de capteur,
avec une pluralité d'éléments de contact (22) pour la mise en contact d'un circuit (92) disposé dans le boîtier électronique (70),
avec un câble de raccordement (50) comportant une pluralité de conducteurs (52) qui sont reliés respectivement aux éléments de contact (22), et
avec au moins un élément lumineux, plus particulièrement une diode électroluminescente (24), pour la fourniture d'une indication optique à un utilisateur, les éléments de contact (22) et l'élément lumineux (24) étant logés dans un module d'indication de contact (20) au moins en partie transparent,
le module d'indication de contact (20), en même temps qu'une partie d'extrémité (54) du câble de raccordement (50), étant entouré, pour la stabilisation mécanique et l'isolation électrique, au moins en partie d'une gaine (40) réalisée d'une seule pièce et au moins en partie transparente, de telle sorte que le câble de raccordement (50) est relié de manière robuste au module d'indication de contact (20),
la gaine (40) comprenant une pluralité de bagues d'étanchéité (11, 13, 15) pour réaliser l'étanchéité par rapport à un manchon de boîtier (80) devant être inséré sur une partie de la gaine (40), et
pour la fourniture d'une ouverture de ventilation, au moins deux des bagues d'étanchéité (11, 13, 15) étant munies d'au moins un évidement axial (41, 43), les évidements (41, 43) des bagues d'étanchéité (11, 13) étant prévus en étant disposés l'un et l'autre dans la direction périphérique, plus particulièrement en étant en face l'un de l'autre.

2. Fermeture de boîtier selon la revendication 1,
dans laquelle :
la gaine (40) comprend une zone de raccordement (42) de plus grand diamètre, proche du boîtier, et un départ de câble (44) de plus petit diamètre, éloigné du boîtier, une zone de transition (46) entre la zone de raccordement (42) et le départ de câble (44) étant formée pour s'engager de manière robuste, par l'arrière, avec un manchon de boîtier (80).

3. Fermeture de boîtier selon une des revendications 1 ou 2,
dans laquelle :
la diode électroluminescente (24) est disposée dans un évidement (26) prévu dans le module d'indication de contact (20).

4. Fermeture de boîtier selon la revendication 3,
dans laquelle :
l'évidement (26) pour la diode électroluminescente (24) est une cavité borgne axiale à l'intérieur du module d'indication de contact (20).

5. Fermeture de boîtier selon une des revendications 1 à 4,
dans laquelle :
les éléments de contact sont des broches de contact (22), et
dans laquelle les broches de contact (22) et les bornes de connexion (25) de la diode électroluminescente (24) s'étendent à l'état préassemblé dans la direction du boîtier électronique (70).

6. Fermeture de boîtier selon une des revendications 1 à 5,
dans laquelle :
un canal de ventilation (60) est formé dans le module d'indication de contact (20) et/ou dans la gaine (40).

7. Fermeture de boîtier selon la revendication 6,
dans laquelle :
un élément semi-perméable, plus particulièrement un élément en feutre, est disposé dans le canal de ventilation (60), en étant perméable pour l'air et imperméable vis-à-vis d'un matériau de mousse ou d'enrobage.

8. Fermeture de boîtier selon la revendication 6 ou 7,
dans laquelle :
le module d'indication de contact (20) comprend, en tant que partie du canal de ventilation (60), un orifice borgne (62) s'étendant dans la direction axiale (10) avec une ouverture latérale (66) orientée transversalement par rapport à la direction axiale (10).

9. Fermeture de boîtier selon une des revendications 6 à 8,
dans laquelle :
la gaine (40) comprend, en tant que partie du canal de ventilation (60), une rainure (68) disposée de manière externe et s'étendant dans la direction axiale (10), avec une ouverture de communication (64) qui s'étend transversalement à la direction axiale (10) et qui est alignée avec l'ouverture latérale (66) du module d'indication de contact (20).

10. Fermeture de boîtier selon une des revendications 1 à 9,
dans laquelle :
la gaine (40) est réalisée par surmoulage du module d'indication de contact (20) et de la partie d'extrémité (54) du câble de raccordement (50).

11. Fermeture de boîtier selon une des revendications 1 à 10,
dans laquelle :
le module d'indication de contact (20) comprend, pour la fourniture d'une liaison robuste avec la gaine (40), au moins un élément profilé (28), plus particulièrement sur toute la périphérie.

12. Module de détection avec une fermeture de boîtier (100) selon une des revendications 1 à 11,
avec un circuit électronique (92) disposé sur une carte de circuit imprimé (90), les broches de contact (22) et les bornes de connexion de l'élément lumineux - plus particulièrement de la diode électroluminescente (24) - de la fermeture de boîtier (100) étant reliées, plus particulièrement soudées, à la carte de circuit imprimé (90), et
avec un élément de détection (94) - notamment une bobine avec un élément en ferrite - disposé sur la carte de circuit imprimé (90), du côté opposé à la fermeture de boîtier (100).

13. Capteur - plus particulièrement détecteur de proximité - avec un module de détection (150) selon la revendication 12,
qui est inséré dans un manchon de boîtier (80), le manchon de boîtier (80) étant fermé par un capuchon frontal (88) d'un côté situé à l'opposé de la fermeture de boîtier (100).

14. Capteur selon la revendication 13,
dans lequel :
le manchon de boîtier (80) est relié de manière robuste à la fermeture de boîtier (100) par l'intermédiaire d'un bord rabattu (82) du manchon de boîtier (80).

15. Procédé de fabrication d'une fermeture d'extrémité pour boîtier électronique - et notamment pour boîtier de capteur - plus particulièrement selon l'une des revendications 1 à 14,
selon lequel les conducteurs (52) d'un câble de raccordement (50) sont reliés à des éléments de contact (22) - plus particulièrement à des broches de contact (22) - qui sont logés dans un module d'indication de contact (20) au moins en partie transparent,
selon lequel un élément lumineux - plus particulièrement une diode électroluminescente (24) - est disposé dans un évidement (26) prévu à cet effet dans le module d'indication de contact (20),
selon lequel une gaine (40) réalisée d'une seule pièce et au moins en partie transparente est mise en place autour du module d'indication de contact (20) et d'une partie d'extrémité (54) du câble de raccordement (50) pour l'isolation électrique et la stabilisation mécanique,
selon lequel la gaine (40) comprend une pluralité de bagues d'étanchéité (11, 13, 15) pour réaliser l'étanchéité par rapport à un manchon de boîtier (80) devant être inséré sur une partie de la gaine (40),
selon lequel, pour la fourniture d'une ouverture de ventilation, au moins deux des bagues d'étanchéité (11, 13, 15) sont munies d'au moins un évidement axial (41, 43), les évidements (41, 43) des bagues d'étanchéité (11, 13) étant prévus en étant disposés l'un et l'autre dans la direction périphérique, plus particulièrement en étant en face l'un de l'autre.

16. Procédé selon la revendication 15,
selon lequel :
la gaine (40) est mise en place par surmoulage du module d'indication de contact (20) et de la partie d'extrémité (54) du câble de raccordement (50).

17. Procédé selon une des revendications 15 ou 16,
selon lequel :
un orifice de ventilation est réalisé dans la gaine (40) et/ou dans le module d'indication de contact.
